# EUROPÄISCHE PATENTSCHRIFT

(11) **EP 3 615 371 B1**
(45) Veröffentlichungstag und Bekanntmachung des Hinweises auf die Patenterteilung: **24.04.2024**
(21) Anmeldenummer: 18702072.2
(22) Anmeldetag: 08.01.2018
(51) Int. Cl.: H04B 3/54

(54) **VERFAHREN ZUR ZWEISTUFIGEN AUTORISIERUNG EINES LADEVORGANGS AN EINER LADESÄULE**
METHOD FOR A TWO-STAGE AUTHORIZATION OF A CHARGING PROCESS ON A CHARGING POST
PROCÉDÉ PERMETTANT D'AUTORISER EN DEUX ÉTAPES UNE OPÉRATION DE CHARGE AU NIVEAU D'UNE COLONNE DE CHARGE

(30) Priorität: 25.04.2017 DE 102017206948
(43) Veröffentlichungstag der Anmeldung: 04.03.2020
(73) Patentinhaber: EcoG GmbH, 81825 München (DE)
(72) Erfinder: BODE, Sebastian, 59229 Ahlen (DE)
(74) Vertreter: Fink Numrich Patentanwälte PartmbB
(86) Internationale Anmeldenummer: PCT/EP2018/050378
(87) Internationale Veröffentlichungsnummer: WO 2018/197053

(56) Entgegenhaltungen:
- EP-A1- 3 609 731
- EP-A1- 3 609 732
- EP-A2- 2 769 871
- WO-A1-2012/034216
- WO-A1-2013/144954
- WO-A1-2015/043247
- WO-A1-2016/156568
- WO-A2-2013/017446
- WO-A2-2016/156567
- DE-A1-102009 008 157
- DE-A1-102011 010 774
- DE-A1-102011 083 065
- FR-A1- 3 002 100
- US-A1- 2010 013 434
- US-A1- 2010 114 798
- US-A1- 2010 274 570
- US-A1- 2014 002 018
- Richard M. Pratt ET AL: "Electric Vehicle Communication Standards Testing and Validation - Phase I: SAE J2847/1", Electric Vehicle Communication Standards Testing and Validation Phase I: SAE J2847/1, 30 September 2011 (2011-09-30), XP055310941, DOI: 10.2172/1126382 Retrieved from the Internet: URL:http://www.pnnl.gov/main/publications/ external/technical_reports/PNNL-20913.pdf [retrieved on 2016-10-14]

## Beschreibung

Die Erfindung betrifft ein Verfahren zur zweistufigen Autorisierung eines Ladevorgangs an einer Ladesäule, eine Steuerungsvorrichtung für eine Ladesäule sowie eine Ladesäule zur Aufladung eines Fahrzeugs mit elektrischer Energie.

Elektrofahrzeuge bzw. zumindest teilweise mit elektrischer Energie angetriebene Fahrzeuge weisen mindestens einen Akkumulator auf, welcher in einem laufenden Betrieb des Elektrofahrzeugs regelmäßig zu laden ist. Zum Laden wird das Elektrofahrzeug an einer Ladesäule abgestellt, um dessen Akkumulatoren über ein Elektrokabel oder mittels Induktionsspulen aufzuladen.

Zur Abrechnung der entnommenen elektrischen Energie oder einer sonstigen Ladedienstleistung muss ein Betreiber einer Ladesäule zumindest Kenntnis über ein einer Identität des Ladesäulennutzer zuzuordnendes Identifikationsdatum haben, über das zum Zweck einer Abrechnung eine Identifizierung gegebenenfalls auch über Dritte möglich ist. Im Rahmen einer Autorisierung wird geprüft, ob ein identifizierter Ladesäulennutzer auch die notwendige Berechtigung aufweist.

Im Stand der Technik sind Verfahren bekannt, mit denen eine solche Identifizierung und Autorisierung eines Ladesäulennutzers an einer Ladesäule bewerkstelligt werden kann. Bekannt ist beispielsweise ein Einsatz von Karten oder auch Kreditkarten zur drahtlosen Identifizierung eines Ladesäulennutzers. Mit Hilfe übergebener Identifikationsdaten der Karte wird in der Ladesäule - eventuell unter Beteiligung eines von der Ladesäule örtlich getrennten Autorisierungsserver - die Autorisierung des Karteninhabers überprüft, bevor eine Ladefreigabe seitens der Ladesäule erfolgt.

Weiterhin werden mobile Endgeräte, insbesondere Smart Phones oder Smart Watches, in Verbindung mit einer entsprechenden Applikation zur Identifizierung des Ladesäulennutzers verwendet. Nach Bestätigung der Identität - welche optional mit zusätzlichen Authentifizierungsmerkmalen wie Geheimzahleneingabe usw. einhergeht - erfolgt eine Autorisierung, also eine Ermittlung, ob der identifizierte Ladesäulennutzer zu einer Nutzung berechtigt ist, gefolgt von einer Auswahl und Ladefreigabe der durch den Ladesäulennutzer gewünschten Ladesäule.

Zur erleichterten Bedienung der Ladesäule sind Überlegungen getroffen worden, einen fahrzeugseitig vorgehaltenen Berechtigungsnachweis vorzusehen, welcher nach einer Verbindung des Ladekabels vom Fahrzeug an die Ladesäule übermittelt wird und auf Basis dessen eine Identifikation und Autorisierung eines dem Fahrzeug zugehörigen oder zuordenbaren Ladesäulennutzers ermöglicht wird, ohne dass der Ladesäulennutzer weitere Berechtigungsnachweise - beispielsweise durch Eingabe oder Übergabe von Identifikationsdaten bzw. Passwörtern - leisten müsste.

Eine Übertragung des fahrzeugseitigen Berechtigungsnachweis erfolgt mittels einer in fachüblicher Weise ausgestalteten Datenübertragung zwischen der Ladesäule und dem Fahrzeug, beispielsweise mittels Powerline Communication, bzw. PLC, oder auch über eine zum Ladekabel parallel verlaufende bzw. einer im Ladekabel integrierten, zu einer Ladeleitung parallel laufenden Datenleitung. Eine solche benutzeraktionsfreie Autorisierung ist in der Fachwelt - in Anlehnung an das aus der Softwareentwicklung bekannte Paradigma »Plug & Play« - auch als »Plug & Charge« bekannt.

Von Seiten eines Ladesäulenbetreibers wird eine Autorisierung insbesondere zum Schutz vor Vandalismus als erforderlich gesehen. Eine diesem Zweck dienende Autorisierung soll gewährleisten, dass ein Ladekabel der Ladesäule erst dann freigegeben - also beispielsweise ein zur elektrischen Verbindung mit dem Fahrzeug vorgesehener Stecker am Ende des Ladekabels erst dann an der Ladestation entriegelt - wird, wenn ein verantwortlicher Ladesäulennutzer identifiziert und autorisiert wurde. Auf diese Weise sollen mutwillige Beschädigungen der Ladesäulenperipherie verhindert werden.

Bislang sind im Stand der Technik allerdings keine Verfahren bekannt, welche die Vorteile von »Plug & Charge« - also einer benutzeraktionsfreien Autorisierung des Ladevorgangs aufgrund eines fahrzeugseitigen Berechtigungsnachweises - mit einer für einen Vandalismusschutz gebotenen Autorisierung zur Freigabe des Ladekabels vereinen können. Das Problem besteht nämlich darin, dass zur Übermittlung des fahrzeugseitigen Berechtigungsnachweises ein freigegebenes und mit dem Fahrzeug verbundenes Ladekabel erforderlich ist. Eine für einen Vandalismusschutz gebotene Autorisierung soll aber bereits früher ansetzen und eventuell eine zur Autorisierung des Ladevorgangs notwendige Verbindung des Ladekabels mit dem Fahrzeug unterbinden.

Die Druckschrift US 2010/0013434 A1 beschreibt ein Verfahren zur Autorisierung eines Ladevorgangs eines Fahrzeugs an einer Ladestation, bei dem als Berechtigungsnachweis ein RFID-Tag verwendet wird, der von einem Benutzer getragen wird. Nachdem der RFID-Tag von der Ladestation eingelesen wurde, wird ein Ladestecker an der Ladestation freigegeben, so dass die Ladestation mit einem zu ladenden Fahrzeug verbunden werden kann.

Die Druckschrift EP 2 769 871 A2 beschreibt ein Verfahren zum Laden eines elektrischen Fahrzeugs, bei dem überprüft wird, ob die Fahrzeugbatterie durch ein Stromversorgungsgerät geladen werden kann. Ist dies nicht der Fall, wird an einem Benutzerterminal eine Nachricht ausgegeben, die anzeigt, dass der Start des Ladevorgangs fehlgeschlagen ist.

Die Druckschrift R. M. Pratt et al., "Electric Vehicle Communication Standards Testing and Validation - Phase I: SAE J2847/1", Electric Vehicle Communication Standards Testing and Validation Phase I: SAE J2847/1, 30. September 2011, offenbart die Übermittlung von Informationen von einem Fahrzeug, das mit einer Ladesäule verbunden ist. Die Informationen umfassen unter anderem eine Fahrzeugidentifikation, Nutzerinformationen und Batteriedaten.

Die Druckschrift DE 10 2011 083 065 A1 offenbart ein Ladesystem für Elektrofahrzeuge, bei dem die gegenüber einer Ladesäule notwenige Authentisierung mit einer Priorisierungsinformation erweitert wird. Die Priorisierungsinformation ist beispielsweise Teil eines Authentisierungscredentials.

Die Druckschrift WO 2013/144954 A1 offenbart ein Identifikationssystem für eine Fahrzeug-Servicestation mit einem Kunden-Identifikationsmodul, um Daten des Fahrzeugnutzers zu empfangen, und einem Fahrzeug-Identifikationsmodul, um Fahrzeugdaten zu bestimmen. Zur Identifikation des Fahrzeugs bzw. des Fahrzeugnutzers können beispielsweise NFC-basierte Tags verwendet werden. Für die Kommunikation mit den Tags kann eine Datenverschlüsselung basierend auf Zertifikaten und/oder geheimen Schlüsseln zum Einsatz kommen.

Die Druckschrift WO 2015/043241 A1 offenbart ein Authentisierungsverfahren für ein Ladegerät eines Fahrzeugs an einer drahtlosen Ladestation. Im Rahmen der Authentisierung wird ein Nutzerzertifikat einer Nutzerkarte verarbeitet und die Kompatibilität des Ladegeräts mit der drahtlosen Ladestation überprüft.

Aufgabe der vorliegenden Erfindung ist es, ein weitgehend benutzeraktionsfreies Verfahren anzugeben, welches eine Autorisierung zur Freigabe eines Ladekabels mit einer Autorisierung zur Freigabe eines Ladevorgangs aufgrund eines fahrzeugseitigen Berechtigungsnachweises verbindet.

Die Aufgabe wird durch ein Verfahren mit den Merkmalen des Patentanspruchs 1 gelöst.

Das erfindungsgemäße Verfahren sieht eine zweistufige Autorisierung eines Ladevorgangs an einer Ladesäule vor. Die Ladesäule ist eingerichtet zum Laden eines Fahrzeugs mittels eines Ladekabels.

In einem ersten Schritt erfolgt ein Empfang eines von einem mobilen Endgerät über eine Nahfeldkommunikationsverbindung gesendeten endgerätseitigen Berechtigungsnachweises von einer der Ladesäule zugeordneten Steuerungsvorrichtung. Eine auf dem Endgerät zum Ablauf gebrachte Applikation sowie die zwischen Endgerät und der Steuerungsvorrichtung ausgebildete Nahfeldkommunikationsverbindung unterstützen ein benutzeraktionsfreies Verfahren insbesondere dadurch, dass die Übertragung des endgerätseitigen Berechtigungsnachweises ohne besondere zusätzliche Aktionen vonstattengeht. Dies wird in einer vorteilhaften Ausgestaltung insbesondere dadurch erreicht, dass das mobile Endgerät, beispielsweise als Smart Watch, in einem Armbereich eines Ladesäulennutzers getragen wird oder dass das Endgerät, beispielsweise als Smart Phone, in einem körpernahen Bereich des Ladesäulennutzers getragen wird. Beide Varianten haben den Vorteil, dass eine in einem folgenden Verfahrensschritt folgende Prüfung des endgerätseitigen Berechtigungsnachweises sowie eine ebenfalls in einem folgenden Verfahrensschritt folgende Freigabe des Ladekabels bei positivem Ergebnis der Prüfung vom Ladesäulennutzer weitgehend unbemerkt und unverzüglich erfolgt.

In einem zweiten Schritt erfolgt die bereits angesprochene Prüfung des endgerätseitigen Berechtigungsnachweises seitens der Steuerungsvorrichtung. Bei einer solchen Prüfung erfolgt beispielsweise eine Kontrolle, ob eine vorzugsweise personenbezogene Berechtigung des übergebenen endgerätseitigen Berechtigungsnachweises anhand Steuerungsvorrichtungs-interner Einträge gewährt werden kann, oder ob eine Berechtigung des Ladesäulennutzers aufgrund seines übergebenen endgerätseitigen Berechtigungsnachweises nicht gewährt werden kann oder zwischenzeitlich entzogen wurde.

Der endgerätseitige Berechtigungsnachweis, in der Fachwelt auch als Credentials bekannt, dient einem gegebenenfalls temporären Nachweis einer Identität des Ladesäulennutzers und kann ein oder mehrere Kennzeichnungen der Authentizität enthalten, im derzeitigen Stand der Technik meist durch digitale kryptografische Signaturen dargestellt. Der vom mobilen Endgerät übergebene Berechtigungsnachweis respektive die enthaltenen Signaturen können optional oder zusätzlich von einer Instanz außerhalb der Steuerungsvorrichtung überprüft werden, insbesondere von einem Autorisierungsserver, welcher mit der Ladesäule über ein Datennetzwerk oder über eine Steuerungsleitung verbunden ist. Dazu kann die überprüfende Instanz unter anderem die kryptografischen Signaturen komplett oder teilweise verifizieren anhand von entsprechendem Schlüsselmaterial. Dieses Schlüsselmaterial kann vom Endgerät bezogen werden, ggf. in Form eines Objektes, das wiederum von einer dritten Stelle authentifiziert wurde, die für das Endgerät und die Steuerungsvorrichtung bzw. den Autorisierungsserver vertrauenswürdig sind.

Die erfindungsgemäße drahtlose Nahfeldkommunikationsverbindung zur Verbindung mit dem mobilen Endgerät ist für einen Austausch zumindest eines Teilbereichs des endgerätseitigen Berechtigungsnachweises eingerichtet. Eine Nahfeldkommunikationsverbindung bzw. Nahfeldkommunikation im Sinne dieser Beschreibung umfasst alle drahtlosen Kommunikationsweisen, welche nicht auf ein Übertragungsverfahren mit einem zellulären Mobilfunknetz beruhen. Insbesondere ist der Begriff Nahfeldkommunikationsschnittstelle bzw. Nahfeldkommunikation im Sinne dieser Beschreibung nicht auf das ähnlich lautende Übertragungsverfahren »Near Field Communication« oder NFC zum kontaktlosen Austausch von Daten per elektromagnetische Induktion beschränkt.

Bei positivem Ergebnis dieser Prüfung des endgerätseitigen Berechtigungsnachweises seitens der Steuerungsvorrichtung wird eine erste Autorisierung eingerichtet. Die erste Autorisierung des erfindungsgemäß zweistufigen Autorisierungsverfahrens ist in vorteilhafter Weise personenbezogen, also auf einen berechtigen Ladesäulennutzer gerichtet.

In einem dritten Schritt erfolgt eine Freigabe des Ladekabels aufgrund der ersten Autorisierung, woraufhin ein Nutzer eine konduktive und kommunikative Verbindung zwischen Fahrzeug und Ladesäule über das Ladekabel herstellen kann. Die erste Autorisierung bewirkt also erfindungsgemäß, dass der Ladesäulennutzer den Stecker des Ladekabels an der Ladestation entnehmen kann, um diesen in seinem Fahrzeug einzustecken. Eine Freigabe des Ladekabels erfolgt beispielsweise durch eine Entriegelung des Steckers an der Ladesäule oder durch Freigeben des Steckers mit einem Öffnen einer den Stecker verdeckenden Abdeckung an der Ladesäule.

In einem vierten Schritt erfolgt ein Empfang eines fahrzeugseitigen Berechtigungsnachweises von der Steuerungsvorrichtung, wobei der fahrzeugseitige Berechtigungsnachweis (ein digitales Zertifikat enthält oder Bestandteil eines digitalen Zertifikats ist. Dieser Empfang des fahrzeugseitigen Berechtigungsnachweises erfolgt nach einer Verbindung des Fahrzeugs mit dem Ladekabel, welches die Ladestation mit dem Fahrzeug konduktiv und kommunikativ verbindet.

In einem fünften Schritt erfolgt eine Prüfung des empfangenen fahrzeugseitigen Berechtigungsnachweises anhand des Zertifikats seitens der Steuerungsvorrichtung und bei positivem Ergebnis der Prüfung, Einrichtung einer zweiten Autorisierung.

In einem sechsten Schritt erfolgt eine Freigabe des Ladevorgangs aufgrund der zweiten Autorisierung. Durch die zweite Autorisierung wird die erste Autorisierung ersetzt. Die Freigabe des Ladevorgangs bei gegebener zweiter Autorisierung bewirkt eine Zuordnung der Ladesäule zum Fahrzeug, mit der das Laden des Fahrzeugs gestartet wird oder gestartet werden kann. Der fahrzeugseitige Berechtigungsnachweis, in der Fachwelt auch als Credentials bekannt, dient einem gegebenenfalls temporären Nachweis einer Identität des Fahrzeugs und kann indirekt auch die Identität des Ladesäulennutzers zugordnet werden. Dies ist beispielsweise der Fall, wenn der Ladesäulennutzer auch der Eigentümer des Fahrzeugs ist.

In anderen wichtigen Anwendungsfällen ist der Eigentümer des Fahrzeugs nicht mit dem Ladesäulennutzer identisch, beispielsweise bei Car Sharing oder Mietfahrzeugen. Hier zeigt sich ein weiterer Vorteil der erfindungsgemäßen zweistufigen Autorisierung darin, dass zwar eine Autorisierung des Eigentümers aufgrund des fahrzeugseitigen Berechtigungsnachweises durchaus gegeben sein kann, eine Autorisierung einer Ladesäulennutzung aber bereits aufgrund eines negativen Ergebnisses der Prüfung des endgerätseitigen Berechtigungsnachweises zurückgewiesen sein kann. Da ein nicht autorisierter Ladesäulennutzer aufgrund keinen Zugriff auf das Ladekabel erhält, ist es ihm auch nicht möglich, die zweite Autorisierung zu erhalten, da der Empfang des fahrzeugseitigen Berechtigungsnachweises aufgrund der fehlenden Freigabe des Ladekabels scheitert. Diese Möglichkeit, einen Ladesäulennutzer aufgrund einer Sperrung auszuschließen, so dass er eine Autorisierung nicht über den fahrzeugseitigen Berechtigungsnachweises mit fremder Identität erwirken kann, bildet einen wesentlichen Vorteil der Erfindung.

Umgekehrt kann der Fall eintreten, dass ein autorisierter Ladesäulennutzer zwar Zugriff auf das Ladekabel erhalten, jedoch kann eine Autorisierung auf Basis des fahrzeugseitigen Berechtigungsnachweises scheitern, beispielsweise aufgrund einer Sperre des Fahrzeugeigentümers in Folge offengebliebener Rechnungen. Diese Möglichkeit, einen Fahrzeugeigentümer aufgrund einer Sperrung auszuschließen, begründet einen weiteren Vorteil der Erfindung.

Weitere Ausgestaltungen der Erfindung sind Gegenstand der abhängigen Patentansprüche.

Im Weiteren werden Ausführungsformen des erfindungsgemäßen Verfahrens und der erfindungsgemäßen Steuerungsvorrichtung unter Bezug auf die beigefügten Figuren beschrieben.

Es zeigen:
- Fig. 1: ein Blockschaltbild zur Darstellung einer Ladein-frastruktur in Zusammenwirkung mit erfindungsgemäßen Funktionseinheiten; und;
- Fig. 2: ein Ablaufbild zur Darstellung einer Ausführungsform des erfindungsgemäßen Verfahrens.

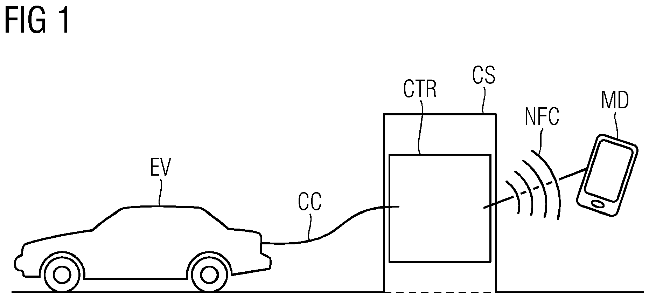

Fig. 1 zeigt ein an einer Ladesäule CS ladendes Fahrzeug EV. Eine Energieübertragung zwischen der Ladesäule CS und dem Fahrzeug EV erfolgt über ein Ladekabel CC. Weitere fachübliche Funktionskomponenten innerhalb der Ladesäule CS, welche die Bereitstellung und Aufbereitung des elektrischen Ladestromstroms betreffen, sind aus Übersichtlichkeitsgründen nicht dargestellt. Der Ladesäule CS ist eine Steuerungsvorrichtung CTR zugeordnet oder in dieser integriert.

Eine Datenübertragung zwischen dem Fahrzeug EV und der Ladesäule CS erfolgt beispielsweise mittels Powerline Communication, auch PLC genannt, über das Ladekabel CC oder alternativ über eine separate, parallel zum Ladekabel CC verlaufende - nicht dargestellte - Datenleitung.

In einem - nicht dargestellten- Stadium, bevor das Ladekabel CC der Ladesäule CS noch nicht mit dem Fahrzeug EV verbunden ist, also beispielsweise ein - nicht dargestellter - Stecker des Ladekabels CC noch an der Ladestation CS verriegelt ist, ist an der Steuerungsvorrichtung CTR eine drahtlose Nahfeldkommunikationsverbindung NFC zur Verbindung mit einer entsprechenden Nahfeldkommunikationsschnittstelle eines mobilen Endgeräts MD ausgebildet.

Die drahtlose und bidirektionale Nahfeldkommunikationsverbindung NFC zwischen der Steuerungsvorrichtung CTR und dem mobilen Endgerät MD ist beispielweise unter Verwendung üblicher Nahfeldkommunikationsprotokolle ausgestaltet. Diese umfassen beispielsweise:
- WLAN (Wireless Local Area Network) bzw. WiFi (Wireless Fidelity), beispielsweise gemäß einem Kommunikationsstand der Standard-Familie IEEE 802.11;
- Bluetooth gemäß einem Kommunikationsstand IEEE 802.15.1, Bluetooth Low Energy oder BLE gemäß einer Erweiterung der Bluetooth-Spezifikationen, beispielsweise gemäß Bluetooth Low Energy Spezifikation 4.2; und/oder;
- Übertragungsverfahren zum kontaktlosen Austausch von Daten per elektromagnetischer Induktion mittels lose gekoppelter Spulen, auf welche auch als Near Field Communication Bezug genommen wird.

Während ein Ladesäulennutzer nach dem Ladekabel CC greift, oder auch bereits beim Annähern des Ladesäulennutzers an die Ladesäule CS, wird vom mobilen Endgerät MD über die zuvor ausgebildete Nahfeldkommunikationsverbindung NFC ein - nicht dargestellter - endgerätseitiger Berechtigungsnachweis gesendet.

Nach Empfang des endgerätseitigen Berechtigungsnachweises durch die Steuerungsvorrichtung CTR erfolgt eine Prüfung des endgerätseitigen Berechtigungsnachweises seitens der Steuerungsvorrichtung CTR. Bei einer solchen Prüfung erfolgt beispielsweise eine Kontrolle, ob eine vorzugsweise personenbezogene Berechtigung des übergebenen endgerätseitigen Berechtigungsnachweises anhand Steuerungsvorrichtungs-interner Einträge gewährt werden kann, oder ob eine Berechtigung des Ladesäulennutzers aufgrund seines übergebenen endgerätseitigen Berechtigungsnachweises nicht gewährt werden kann oder zwischenzeitlich entzogen wurde. Bei positivem Ergebnis der Prüfung erfolgt dann eine Einrichtung einer ersten Autorisierung, gemäß der eine Freigabe des Ladekabels CC erfolgt.

Der Ladesäulennutzer kann nun, ohne die Freigabe gesondert zu bemerken, das Ladekabel CC aus einer mittlerweile entriegelten Halterung der Ladestation CS entnehmen und dieses mit dem Fahrzeug EV verbinden.

Nachdem das Ladekabel CC wie in Fig. 1 gezeigt mit dem Fahrzeug EV verbunden ist, erfolgt ein Empfang des - in Fig. 1 nicht dargestellten - fahrzeugseitigen Berechtigungsnachweises durch die Steuerungsvorrichtung CTR. Dieser Empfang des fahrzeugseitigen Berechtigungsnachweises erfolgt nach einer Verbindung des Fahrzeugs EV mit dem Ladekabel CC, welcher die Ladestation mit dem Fahrzeug sowohl konduktiv als auch kommunikativ verbindet.

Daraufhin erfolgt eine Prüfung des empfangenen fahrzeugseitigen Berechtigungsnachweises seitens der Steuerungsvorrichtung CTR. Bei positivem Ergebnis der Prüfung erfolgen eine Einrichtung einer zweiten Autorisierung sowie eine Freigabe des Ladevorgangs aufgrund der zweiten Autorisierung. Die Freigabe des Ladevorgangs bei gegebener zweiter Autorisierung bewirkt eine Zuordnung der Ladesäule zum Fahrzeug, mit der das Laden des Fahrzeugs gestartet wird oder gestartet werden kann.

Die Nahfeldkommunikationsverbindung NFC kann auch, wie gezeigt, nach dem Stecken des Ladekabels weiter unterhalten werden, etwa um über das mobilen Endgerät MD eine Steuerung der Ladesäule während des Ladevorgangs vorzunehmen, beispielsweise um eine Steuerung des Ladevorgangs über eine entsprechende Eingabe am mobilen Endgerät MD zu veranlassen.

Eine solche Steuerung kann, gemäß einer alternativen Ausführungsform, beispielsweise den Fall umfassen, dass eine zweite Autorisierung aufgrund einer Prüfung des fahrzeugseitigen Berechtigungsnachweises fehlschlägt oder aber vom Ladesäulennutzer unerwünscht ist. Der letztgenannte Fall einer vom Ladesäulennutzer unerwünschten zweiten Autorisierung aufgrund einer Prüfung des fahrzeugseitigen Berechtigungsnachweises kann beispielsweise dann eintreten, wenn der Ladesäulennutzer eine Abrechnung der zu entnehmenden elektrischen Energie nicht aufgrund des fahrzeugseitigen Berechtigungsnachweises, sondern auf eigene Rechnung wünscht. In einem solchen Fall kann die Steuerung des Ladevorgangs umfassen, dass der Ladesäulennutzer an seinem mobilen Endgerät veranlasst, dass die Ladefreigabe nicht auf Basis des fahrzeugseitigen Berechtigungsnachweises, sondern auf Basis des endgerätseitigen Berechtigungsnachweises oder basierend auf einem weiteren Berechtigungsnachweis mit einem persönlichen Konto des Ladesäulennutzers autorisiert wird.

Gemäß dem erfindungsgemäßen zweistufigen Autorisierungsverfahren wird die insoweit vorläufige, persönliche erste Autorisierung ersetzt durch die zweite Autorisierung. Dies ist insbesondere von Vorteil, wenn der Fahrzeugführer von einem Rechnungsadressaten der in Rechnung zu stellenden Ladeenergie verschieden ist.

Die erste Autorisierung dient insofern einem Vandalismusschutz. Für den Ladesäulenbetreiber ist es möglich, bestimmte Ladesäulennutzer ausweislich deren endgerätseitiger Berechtigungsnachweise zu sperren, beispielsweise in Folge einer zuvor stattgefundenen missbräuchlichen Bedienung der Ladesäule CS.

Die Steuerungsvorrichtung CTR weist optional Mittel zur Unterhaltung einer Datenkommunikation mit einem - nicht dargestellten - Autorisierungsserver auf. Der Autorisierungsserver unterstützt in bekannter Weise eine Benutzerverwaltung, Identifizierung sowie eine Autorisierung für den Ladevorgang seitens der Ladesäule CS. Außerdem kann dieser oder ein anderer Server weitere Aufgaben wie eine Ermittlung sowie eine Verrechnung der an der Ladesäule CS entnommenen elektrischen Energie übernehmen.

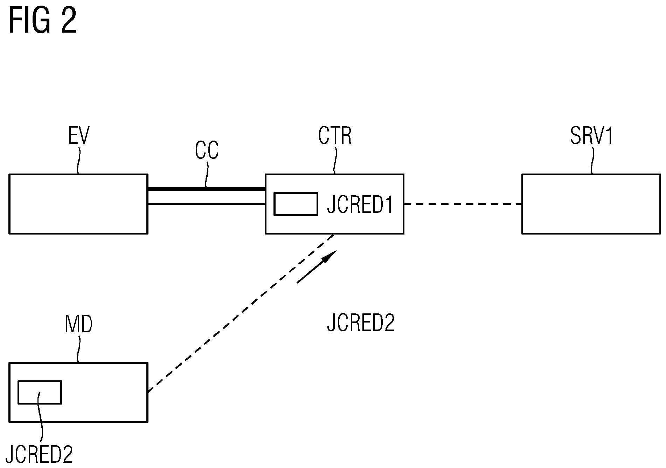

In Fig. 2 ist ein Ablaufbild zur Darstellung einer Ausführungsform des erfindungsgemäßen Verfahrens dargestellt. Gemäß dieser Ausführungsform des erfindungsgemäßen Verfahrens ist vorgesehen, dass der endgerätseitige Berechtigungsnachweis JCRED2 an die der Ladesäule CS zugeordnete Steuerungsvorrichtung CTR übergeben wird. Ein solches Verfahren wird erfindungsgemäß abgearbeitet, wenn der Ladesäulennutzer zusammen mit seinem mobilen Endgerät MD in den Wirkungsbereich der von der Steuerungsvorrichtung CTR ausgebildeten oder vorbereiteten Nahfeldkommunikationsverbindung NFC gelangt.

In einer unmittelbaren Nachbarschaft mehrerer Ladesäulen CS wird bei Übergabe des endgerätseitiger Berechtigungsnachweis JCRED2 eine Steuerverbindung zu mehreren unbelegten, d.h. betriebs- und empfangsbereiten Ladesäulen CS aufgebaut und gewissermaßen mehrere potentielle Steuerverbindungen zu mobilen Endgerät MD bereitgestellt. Erst durch Verbindung des Ladekabels CC wird eine Zuordnung zwischen Ladesäule CS und Fahrzeug EV hergestellt. Alle anderen nicht innerhalb eines definierbaren Zeitraums zugordneten Ladesäulen CS beenden die Steuerverbindung in Folge eines Timeouts, alternativ oder zusätzlich auch durch eine aktive Anweisung durch das mobile Endgerät MD.

Hierzu ist über die seitens der Steuerungsvorrichtung CTR eine Nahfeldkommunikationsschnittstelle NFC ausgebildet, über die eine Übertragung zumindest eines Teilbereiches des endgerätseitigen Berechtigungsnachweis JCRED2 veranlasst wird. Dieser endgerätseitige Berechtigungsnachweis JCRED2 wird von der Steuerungsvorrichtung CTR empfangen und vorübergehend geprüft.

Je nachdem, ob die die Ladesäule CS weitgehend autark arbeitet, oder ob eine Anbindung und Administration mehrerer Ladesäulen durch eine oder mehrere Zentralinstanzen vorgesehen ist, kann eine Identifizierung und Autorisierungsprüfung anhand des endgerätseitigen Berechtigungsnachweises JCRED2 durch einen Autorisierungsserver SRV1 oder mit dessen Beteiligung vorgesehen sein, welcher mit der Steuerungsvorrichtung CTR über ein Datennetzwerk oder über eine - gestrichelt dargestellte - Steuerungsleitung verbunden ist.

Bei positivem Ergebnis der Prüfung erfolgt dann eine Freigabe des Ladekabels CC, auf Grund derer der Ladesäulennutzer nun das Ladekabel CC der Ladesäule CS mit einer Ladesteckdose des Fahrzeugs EV verbinden kann.

Mit einer Verbindung des Ladekabels CC zwischen der Ladesäule CS und dem Fahrzeug EV wird über eine - in der Zeichnung parallel zum dicker gezeichneten Ladekabel CC dargestellte - Datenverbindung zwischen dem Fahrzeug EV und der Steuerungsvorrichtung CTR der im Fahrzeug EV vorgehaltene fahrzeugseitige Berechtigungsnachweises JCRED1 an die Steuerungsvorrichtung CTR übertragen und von der Steuerungsvorrichtung CTR empfangen.

Die Steuerungsvorrichtung CTR verarbeitet die empfangene fahrzeugseitige Berechtigungsnachweises JCRED1 dahingehend, dass eine Zuordnung zwischen der der Ladesäule CS - welcher die Steuerungsvorrichtung CTR zugeordnet ist - und dem Fahrzeug EV herstellbar ist. Hierzu wird zumindest ein Teilbereich des fahrzeugseitigen Berechtigungsnachweises JCRED1 ausgewertet, welcher beispielsweise eine maschinenlesbare Charakterisierung des Fahrzeugs EV und/oder des Fahrzeugeigentümers umfasst.

Auch für die zweite Autorisierung kann eine zumindest teilweise Identifizierung und Autorisierungsprüfung anhand des vom Fahrzeug EV übergebenen Berechtigungsnachweises JCRED1 durch den Autorisierungsserver SRV1 vorgesehen sein.

Gemäß einer vorteilhaften Fortbildung der Erfindung ist vorgesehen, eine Media Access Control-Adresse bzw. MAC-Adresse des Fahrzeugs als Bestandteil des fahrzeugseitigen Berechtigungsnachweises JCRED1 und/oder des endgerätseitigen Berechtigungsnachweises JCRED2 vorzusehen. Diese Maßnahme ist insbesondere vorteilhaft, da die MAC-Adresse des Fahrzeugs EV bereits derzeit für eine Kommunikation zwischen dem Fahrzeug EV und der Ladesäule CS verwendet wird.

Zum Schutz vor Manipulationen gegenüber bösgläubigen Ladesäulennutzern oder auch gegenüber bösgläubigen Ladesäulenbetreibern kann in verschiedenen Fortbildungen der Erfindung eine kryptographische Sicherung der Datenkommunikation erfolgen. Ferner wird in der hier beschriebenen Ausführungsform eine zertifikatbasierte Überprüfung der Berechtigungsnachweise JCRED1, JCRED2 durchgeführt.

Gemäß einer vorteilhaften Fortbildung der Erfindung ist vorgesehen, die Nahfeldkommunikationsverbindung NFC zwischen der Steuerungsvorrichtung CTR und dem mobilen Endgerät MD kryptographisch zu sichern. Eine Sicherung erfolgt vorzugsweise unter Beteiligung eines digitalen Zertifikats, zur kryptographisch gesicherten Bestätigung von Eigenschaften, insbesondere eines Public-Key-Zertifikat zur Bestätigung öffentlicher Schlüssel.

In einer Ausführungsform ist eine Beteiligung eines vorläufig verifizierten digitalen Zertifikats vorgesehen. Gemäß dieser Ausführungsform ist ein Senden eines vorläufig verifizierten digitalen Zertifikates des mobilen Endgeräts MD oder einer daraus extrahierten Prüfinformation vom mobilen Endgerät MD über die aufgebaute Nahfeldkommunikationsverbindung NFC zur Steuerungsvorrichtung CTR vorgesehen, anhand welcher die Steuerungsvorrichtung CTR, optional in Zusammenarbeit mit dem Autorisierungsserver SRV1 eine Autorisierungsprüfung des mobilen Endgerät MD durchführt. Anschließend wird ein Ergebnis dieser Prüfung vom Autorisierungsserver SRV1 zur Steuerungsvorrichtung CTR, welche in Abhängigkeit des empfangenen Autorisierungsprüfergebnisses eine Steuerung der Ladesäule CS durch das mobile Endgerät MD freigibt oder nicht.

Je nach Implementierung ist das vorläufig verifizierte digitale Zertifikat entweder Bestandteil des endgerätseitigen Berechtigungsnachweises JCRED2 oder der endgerätseitigen Berechtigungsnachweises JCRED2 ist Bestandteil des vorläufig verifizierten digitalen Zertifikats. Dies gilt in gleicher Weise für den fahrzeugseitigen Berechtigungsnachweises JCRED1.

Bei einer Ausführungsform des erfindungsgemäßen Verfahrens wird die Nahfeldkommunikationsverbindung NFC mittels eines Protokolls zur Verschlüsselung von Datenübertragungen kryptographisch geschützt, beispielsweise mittels Transport Layer Security bzw. TLS, Secure Sockets Layer bzw. SSL oder Internet Protocol Security bzw. IPsec.

Bei einer vorteilhaften Fortbildung der Erfindung werden auch die Kommunikationsverbindungen zwischen der Steuerungsvorrichtung CTR und dem Autorisierungsserver SRV1 sowie zwischen der Steuerungsvorrichtung CTR und dem Fahrzeug EV jeweils oder insgesamt kryptographisch gesichert.

Bei einer Ausführungsform weist das Ergebnis der Prüfung Laderegeln zur Steuerung des Ladevorganges durch die Ladesäule CS auf. Alternativ zu den Laderegeln selbst können auch Steuerdaten bzw. Steuersignale zur Aktivierung derartiger Laderegeln durch eine - nicht dargestellte - fahrzeuginterne Steuerungsvorrichtung des Fahrzeugs EV von der Steuerungsvorrichtung CTR oder vom Autorisierungsserver SRV1 über die Steuerungsvorrichtung CTR Autorisierungsserver zur fahrzeuginternen Steuerungsvorrichtung übertragen werden. Diese Laderegeln können sich ebenfalls in einem Datenspeicher der fahrzeuginternen Steuerungsvorrichtung des Fahrzeuges EV befinden, auf den die Steuerungsvorrichtung CTR der Ladesäule CS Zugriff hat.

Zusammenfassend gewährleistet das erfindungsgemäße Verfahren zur zweistufigen Autorisierung eines Ladevorgangs ein weitgehend benutzeraktionsfreies Verfahren, durch welches in einer ersten Stufe eine persönliche Autorisierung eines Ladesäulennutzers zur Freigabe eines Ladekabels und in einer zweiten Stufe eine Autorisierung zur Freigabe eines Ladevorgangs aufgrund eines über das verbundene Ladekabel empfangenen fahrzeugseitigen Berechtigungsnachweises erfolgt. In der ersten Stufe wird ein von einem beispielsweise als Smart Watch ausgestalteten mobilen Endgerät gesendeter endgerätseitiger Berechtigungsnachweis von einer der Ladesäule zugeordneten Steuerungsvorrichtung empfangen. Eine Prüfung der persönlichen ersten Autorisierung des Ladesäulennutzers aufgrund des endgerätseitigen Berechtigungsnachweises erfolgt, ohne dass ein Zutun durch den Ladesäulennutzer erforderlich ist. Bei gegebener erster Autorisierung wird das Ladekabel freigegeben. In einer zweiten Stufe erfolgt ein Empfang und Prüfung des fahrzeugseitigen Berechtigungsnachweises nach einer Verbindung des Fahrzeugs mit dem Ladekabel, worauf, bei positivem Ergebnis der Prüfung eine zweite Autorisierung erfolgt, in Folge dessen der Ladevorgang freigegeben wird.

## Patentansprüche

1. Verfahren zur zweistufigen Autorisierung eines Ladevorgangs an einer Ladesäule, die Ladesäule (CS) eingerichtet zum Laden eines Fahrzeugs (EV) mittels eines Ladekabels, das Verfahren umfassend folgende Schritte:
a) Empfang eines von einem mobilen Endgerät (MD) über eine Nahfeldkommunikationsverbindung (NFC) gesendeten endgerätseitigen Berechtigungsnachweis (JCRED2) von einer der Ladesäule (CS) zugeordneten Steuerungsvorrichtung (CTR);
b) Prüfung des endgerätseitigen Berechtigungsnachweis (JCRED2) seitens der Steuerungsvorrichtung (CTR) und bei positivem Ergebnis der Prüfung, Einrichtung einer ersten Autorisierung,
c) Freigabe des Ladekabels (CC) aufgrund der ersten Autorisierung, woraufhin ein Nutzer eine konduktive und kommunikative Verbindung zwischen Fahrzeug (EV) und Ladesäule (CS) über das Ladekabel (CC) herstellen kann;
d) Empfang eines fahrzeugseitigen Berechtigungsnachweises (JCRED1) von der Steuerungsvorrichtung (CTR) nach Herstellung der konduktiven und kommunikativen Verbindung zwischen Fahrzeug (EV) und Ladesäule (CS) über das Ladekabel (CC) durch den Nutzer, wobei der fahrzeugseitige Berechtigungsnachweis (JCRED1) ein digitales Zertifikat enthält oder Bestandteil eines digitalen Zertifikats ist;
e) Prüfung des fahrzeugseitigen Berechtigungsnachweises (JCRED1) seitens der Steuerungsvorrichtung (CTR) anhand des digitalen Zertifikats und bei positivem Ergebnis der Prüfung, Einrichtung einer zweiten Autorisierung;
f) Freigabe des Ladevorgangs aufgrund der zweiten Autorisierung;
g) Ersetzen der ersten Autorisierung durch die zweite Autorisierung.

2. Verfahren gemäß Patentanspruch 1, **dadurch gekennzeichnet, dass** das mobile Endgerät (MD) von einem Ladesäulennutzer körpernah, insbesondere armnah getragen wird.

3. Verfahren gemäß einer der vorgenannten Patentansprüche, **dadurch gekennzeichnet, dass** das mobile Endgerät (MD) eine Smart Watch oder ein Smart Phone ist.

4. Verfahren gemäß einer der vorgenannten Patentansprüche, **dadurch gekennzeichnet, dass** zur Freigabe des Ladekabels (CC) ein fahrzeugseitiger Stecker an einem Ende des Ladekabels freigegeben wird.

5. Verfahren gemäß Patentanspruch 4, **dadurch gekennzeichnet, dass** das das Freigeben als Entriegelung des Steckers durchgeführt wird.

6. Verfahren gemäß Patentanspruch 4, **dadurch gekennzeichnet, dass** das Freigeben des Steckers mit einem Öffnen einer den Stecker verdeckenden Abdeckung durchgeführt wird.

7. Verfahren gemäß einer der vorgenannten Patentansprüche, **dadurch gekennzeichnet, dass** die Nahfeldkommunikationsverbindung (NFC) zum Betrieb eines lokalen Funknetzes gemäß einem Kommunikationsstand der Standard-Familie IEEE 802.11 ausgebildet ist.

8. Verfahren gemäß einer der vorgenannten Patentansprüche 1 bis 5, **dadurch gekennzeichnet, dass** die Nahfeldkommunikationsverbindung (NFC) zum Betrieb eines lokalen Funknetzes gemäß einem Kommunikationsstand IEEE 802.15.1 ausgebildet ist.

9. Verfahren gemäß einer der vorgenannten Patentansprüche 1 bis 5, **dadurch gekennzeichnet, dass** die Nahfeldkommunikationsverbindung (NFC) zum Betrieb eines lokalen Funknetzes gemäß Bluetooth Spezifikation 4.2 und/oder Weiterentwicklungen gemäß Bluetooth Low Energy Spezifikationen ausgebildet ist.

10. Verfahren gemäß einer der vorgenannten Patentansprüche, **dadurch gekennzeichnet, dass** die Prüfung mindestens eines Berechtigungsnachweises (JCRED1, JCRED2) zumindest teilweise in Zusammenarbeit mit mindestens einem Autorisierungsserver (SRV1) erfolgt.

11. Verfahren gemäß einer der vorgenannten Patentansprüche, **dadurch gekennzeichnet, dass** über die Nahfeldkommunikationsverbindung (NFC) eine kryptographisch gesicherte Datenverbindung eingerichtet wird.

12. Verfahren gemäß einer der vorgenannten Patentansprüche, **dadurch gekennzeichnet, dass** der endgerätseitige Berechtigungsnachweis (JCRED2) ein digitales Zertifikat enthält.

13. Verfahren gemäß einer der vorgenannten Patentansprüche 1 bis 10, **dadurch gekennzeichnet, dass** der endgerätseitige Berechtigungsnachweis (JCRED2) Bestandteil eines digitalen Zertifikats ist.

14. Steuerungsvorrichtung, eingerichtet zur Ausführung eines Verfahrens nach einem der vorgenannten Ansprüche.

15. Ladesäule mit einer Steuerungsvorrichtung (CTR) gemäß Patentanspruch 14.

## Claims

1. A method for a two-stage authorization of a charging operation at a charging station, the charging station (CS) being configured for charging a vehicle (EV) by means of a charging cable, the method comprising the following steps:
a) receiving, by a control device (CTR) allocated to the charging station (CS), a terminal-side proof of authorization (JCRED2) transmitted by a mobile terminal (MD) via a near-field communication link (NFC);
b) verifying the terminal-side proof of authorization (JCRED2) by the control device (CTR) and, in case of a positive result of the verification, establishing a first authorization,
c) releasing the charging cable (CC) due to the first authorization, whereupon a user can establish a conductive and communicative connection between the vehicle (EV) and the charging station (CS) via the charging cable (CC);
d) receiving a vehicle-side proof of authorization (JCRED1) by the control device (CTR) upon establishment of the conductive and communicative connection between the vehicle (EV) and the charging station (CS) via the charging cable (CC) by the user, where the vehicle-side proof of authorization (JCRED1) contains a digital certificate or is part of a digital certificate.;
e) verifying the vehicle-side proof of authorization (JCRED1) by the control device (CTR) based on the digital certificate and, in case of a positive result of the verification, establishing a second authorization; and
f) approving the charging operation due to the second authorization;
g) replacing the first authorization by the second authorization.

2. The method according to claim 1, **characterized in that** the mobile terminal device (MD) is carried by a charging station user close to the body, in particular close to the arm.

3. The method according to one of the preceding claims, **characterized in that** the mobile terminal device (MD) is a Smart Watch or a Smart Phone.

4. The method according to one of the preceding claims, **characterized in that** for releasing the charging cable (CC) a vehicle-side plug at one end of the charging cable is released.

5. The method according to claim 4, **characterized in that** the releasing is carried out by unlocking of the plug.

6. The method according to claim 4, **characterized in that** the releasing of the plug is carried out by opening a cover covering the plug.

7. The method according to one of the preceding claims, **characterized in that** the near-field communication link (NFC) is adapted to operate a local radio network according to a communication standard of the standard family IEEE 802.11.

8. The method according to one of the preceding claims 1 to 5, **characterized in that** the near-field communication link (NFC) is adapted to operate a local radio network according to a communication standard IEEE 802.15.1.

9. The method according to one of the preceding claims 1 to 5, **characterized in that** the near-field communication link (NFC) is adapted to operate a local radio network according to Bluetooth specification 4.2 and/or further developments according to Bluetooth Low Energy specifications.

10. The method according to one of the preceding claims, **characterized in that** the verification of at least one proof of authorization (JCRED1, JCRED2) is carried out at least partially in cooperation with at least one authorization server (SRV1).

11. The method according to one of the preceding claims, **characterized in that** a cryptographically protected data link is established via the near-field communication link (NFC).

12. The method according to one of the preceding claims, **characterized in that** the terminal-side proof of authorization (JCRED2) contains a digital certificate.

13. The method according to one of the preceding claims 1 to 10, **characterized in that** the terminal-side proof of authorization (JCRED2) is part of a digital certificate.

14. A control device configured for carrying out a method according to one of the preceding claims.

15. A charging station comprising a control device (CTR) according to claim 14.

## Revendications

1. Procédé d'autorisation en deux étapes d'un processus de charge sur une colonne de charge, la colonne de charge (CS) étant configurée pour le chargement d'un véhicule (EV) au moyen d'un câble de charge, le procédé comprenant les étapes suivantes :
a) réception d'une accréditation côté terminal (JCRED2) envoyée par un terminal mobile (MD) par le biais d'une connexion de communication en champ proche (NFC) par un dispositif de commande (CTR) associé à la colonne de charge (CS) ;
b) contrôle de l'accréditation côté terminal (JCRED2) du côté du dispositif de commande (CTR) et en cas de résultat positif du contrôle, configuration d'une première autorisation,
c) activation du câble de charge (CC) en raison de la première autorisation, après quoi un utilisateur peut créer une connexion conductrice et communicative entre véhicule (EV) et colonne de charge (CS) par le biais du câble de charge (CC) ;
d) réception d'une accréditation côté véhicule (JCRED1) par le dispositif de commande (CTR) après création de la connexion conductrice et communicative entre véhicule (EV) et colonne de charge (CS) par le biais du câble de charge (CC) par l'utilisateur, dans lequel l'accréditation côté véhicule (JCRED1) contient un certificat numérique ou fait partie d'un certificat numérique ;
e) contrôle de l'accréditation côté véhicule (JCRED1) du côté du dispositif de commande (CTR) à l'aide du certificat numérique et en cas de résultat positif du contrôle, configuration d'une seconde autorisation ;
f) activation du processus de charge en raison de la seconde autorisation ;
g) remplacement de la première autorisation par la seconde autorisation.

2. Procédé selon la revendication 1, **caractérisé en ce que** le terminal mobile (MD) est porté près du corps, notamment près du bras, par un utilisateur de colonne de charge.

3. Procédé selon une des revendications précédentes, **caractérisé en ce que** le terminal mobile (MD) est une montre connectée ou un smartphone.

4. Procédé selon une des revendications précédentes, **caractérisé en ce qu'**un connecteur côté véhicule est activé à une extrémité du câble de charge pour l'activation du câble de charge (CC).

5. Procédé selon la revendication 4, **caractérisé en ce que** l'activation est réalisée en tant que déverrouillage du connecteur.

6. Procédé selon la revendication 4, **caractérisé en ce que** l'activation du connecteur est réalisée avec une ouverture d'un recouvrement couvrant le connecteur.

7. Procédé selon une des revendications précédentes, **caractérisé en ce que** la connexion de communication en champ proche (NFC) est réalisée pour l'exploitation d'un réseau radio local conformément à un état de communication de la famille de normes IEEE 802.11.

8. Procédé selon une des revendications précédentes 1 à 5, **caractérisé en ce que** la connexion de communication en champ proche (NFC) est réalisée pour l'exploitation d'un réseau radio local conformément à un état de communication IEEE 802.15.1.

9. Procédé selon une des revendications précédentes 1 à 5, **caractérisé en ce que** la connexion de communication en champ proche (NFC) est réalisée pour l'exploitation d'un réseau radio local conformément à Bluetooth Version 4.2 et/ou de développements conformément à Bluetooth Versions à Basse Énergie.

10. Procédé selon une des revendications précédentes, **caractérisé en ce que** le contrôle d'au moins une accréditation (JCRED1, JCRED2) s'effectue au moins partiellement en collaboration avec au moins un serveur d'autorisation (SRV1).

11. Procédé selon une des revendications précédentes, **caractérisé en ce qu'**une connexion de données à sécurisation cryptographique est configurée par le biais de la connexion de communication en champ proche (NFC).

12. Procédé selon une des revendications précédentes, **caractérisé en ce que** l'accréditation côté terminal (JCRED2) contient un certificat numérique.

13. Procédé selon une des revendications précédentes 1 à 10, **caractérisé en ce que** l'accréditation côté terminal (JCRED2) fait partie d'un certificat numérique.

14. Dispositif de commande, configuré pour la réalisation d'un procédé selon une des revendications précédentes.

15. Colonne de charge avec un dispositif de commande (CTR) selon la revendication 14.
